# EUROPÄISCHE PATENTANMELDUNG

(11) **EP 4 840 318 A1**
(43) Veröffentlichungstag der Anmeldung: **18.11.2026**
(21) Anmeldenummer: 26151208.1
(22) Anmeldetag: 12.01.2026
(51) Int. Cl.: A22C 17/00, B65B 11/00, B65B 25/06

(54) **VORRICHTUNG UND VERFAHREN ZUR STABILISIERUNG EINES DÖNERSPIESSES**

(30) Priorität: 26.02.2025 BE 202500025
(71) Anmelder: Günes, Tamer, 45143 Essen (DE)
(72) Erfinder: Günes, Tamer, 45143 Essen (DE)
(74) Vertreter: Rössler, Thomas

(57) **Zusammenfassung**

Die vorliegende Erfindung bezieht sich auf eine Lebensmittelspießstabilisierungsvorrichtung, umfassend eine zusammengerollte und/oder zusammenrollbare Struktur, welche zusammengerollt einen ringförmigen Wulst umfasst, welcher durch das Zusammenrollen gebildet wird, und dazu geeignet ist, an einem bestückten Lebensmittelspieß im Bereich eines Spießendes angesetzt zu werden und entlang des Spießes in Längsrichtung des Spießes durch abrollendes Schieben des ringförmigen Wulstes am Spieß entlang abgerollt zu werden, wobei durch das Abrollen eine schlauchartige Verkleidung des Lebensmittelspießes um den Lebensmittelspieß herum gebildet wird, um diesen zu schützen. Hierdurch können Dönerspieße reversibel, effizient und umweltschonend verpackt und an die Kunden geliefert werden. Eine Zentrierhilfe kann vorgesehen sein.

## Beschreibung

Die vorliegende Erfindung bezieht sich auf das Gebiet der Gastronomie und der Versorgung und Belieferung der Gastronomie.

Dönerspieße sind sich (im Grillbetrieb drehende) Spieße (Grillspieße), welche regelmäßig mit Fleischwaren besteckt sind (i.d.R. Dönerfleisch, aber auch andere Lebensmittel z.B. als Fleischersatz bzw. vegetarische oder vegane Varianten sind möglich).

Durch den sich drehenden Spieß wird das Fleisch gebraten; zum Verzehr kann eine äußerste Schicht des angebratenen Fleisches mit einem Messer oder einer Säge abgetragen werden. Das Fleisch ist dann knusprig angebraten, und durch die Freilegung der unterliegenden Fleischschichten wird in Folge auch dieses angebraten.

Dönerfleisch wird in der Regel in großen Mengen von spezialisierten Lieferbetrieben bereitgestellt, und ggf. mittels Zwischenhändler/Großhändlern und/oder Vertrieblern an die Gastronomiebetriebe verkauft und ausgeliefert. Durch ein großes Angebot einer großer Anzahl an Wettbewerbern besteht in dieser Branche ein großer Konkurrenzdruck. An die erworbenen Spieße werden von den Entscheidern sehr hohe Qualitätsanforderungen gestellt, gar auch an Stabilitäts- und Ästhetikmerkmale, wie beispielsweise eine völlig makellose und symmetrische und gleichmäßige Form. Bereits kleine Abweichungen und Unebenheiten können Kaufentscheidungen maßgeblich beeinfussen, oder führen zu Reklamationen, gar manchmal zur Kündigung von Dauerbezugsvereinbarungen.

Regelmäßig werden daher die Dönerspieße zu ihrem Schutz exzessiv in dünne Kunststofffolie eingewickelt, sodann zur Lieferung und Konservierung eingefroren/schockgefrostet.

Die Dönerspieße, welche ihren Ursprung in der türkischen gastronomischen Kultur haben, haben heutzutage weltweite Bekanntheit und Verbreitung.

### Technischer Hintergrund

Dönerspieße sind sich drehende Spieße (Grillspieße), welche regelmäßig mit Fleischwaren (Dönerfleisch, aber auch andere Lebensmittel z.B. als Fleischersatz bzw. vegetarische oder vegane Variante sind möglich) besteckt sind. Ein Dönerspieß kann beispielsweise Rind, Kalb, Hähnchen oder Pute umfassen.

Durch den sich drehenden Spieß wird das Fleisch gebraten; zum Verzehr kann eine äußerste Schicht des angebratenen Fleisches mit einem Messer oder einer Säge abgetragen werden. Das Fleisch ist dann knusprig angebraten, und durch die Freilegung der unterliegenden Fleischschichten wird in Folge auch dieses angebraten.

Dönerfleisch wird in der Regel in großen Mengen von spezialisierten Lieferbetrieben bereitgestellt, und ggf. mittels Zwischenhändler/Großhändlern und/oder Vertrieblern an die Gastronomiebetriebe verkauft und ausgeliefert.

Regelmäßig werden im Stand der Technik die Dönerspieße zu ihrem Schutz exzessiv in dünne Kunststofffolie eingewickelt, sodann zur Lieferung und Konservierung eingefroren/schockgefrostet (manchmal auch erst in einer Kühlzone zwischengelagert).

Im Folgenden seien einige übliche Schritte bei einer üblichen Vorgehensweise zur Herstellung eines Dönerspießes beispielhaft umschrieben:
Üblicherweise wird das primäre Lebensmittel, in der Regel Fleisch (Rind, Kalb, Hähnchen, Pute, etc.) auf Frische und Hygiene geprüft. Das Fleisch wird entbeint, gereinigt und in handlichen Stück oder Scheiben geschnitten. Je nach Rezept bzw. gewünschtem Geschmack und Saftigkeit kann der Fettanteil angepasst werden. Es wird eine Marinade zum Würzen gemäß Rezeptur hergestellt; in diese Marinade wird das Fleisch, z.B. mehrere Stunden oder über Nacht, eingelegt, um den gewünschten Geschmack und die gewünschte Zartheit zu erreichen.

Nun wird ein Lebensmittelspieß/Dönerspieß gesteckt. Ein Dönerspieß kann beispielsweise eine Dönerhülse aus Aluminium oder eine aluminiumbeschichtete Kartonhülse sein oder umfassen.

Das marinierte Fleisch wird auf diesen Dönerspieß geschichtet. Dabei werden die Fleischstücke sorgfältig übereinandergelegt, um Stabilität und gleichmäßiges Garen zu gewährleisten. Ein "Kompaktieren" kann regelmäßig stattfinden: Dabei wird der Spieß festgedrückt, für eine gleichmäßige Form und Struktur. Es können optional Zwischenschichten (Fett, Hackfleisch, etc.) zugefügt weren.

Der Spieß wird dabei freilich in gewünschter Menge; Gewicht; Rezeptur gesteckt. Es findet eine Formverarbeitung des Spießes statt, in der Regel durch "Zurechtschneidung" nach dem Bestecken.

Der fertig geschichtete und geformte Spieß wird vor dem Verpacken auf Stabilität geprüft. Eventuelle Unebenheiten werden korrigiert. Eine vorgegebene und gleichmäßige Struktur und Stabilität ist für die Kunden essentiell, und daher von hoher Bedeutung.

Der Spieß wird zur Auslieferung an den Kunden und zu seiner Konservierung (tief)gefroren (z.B. auch schockgefrostet) oder - i.d.R. bei vorhersehbarem zügigem Verbrauch durch den Kunden - gekühlt. Eine übliche Temperatur für die Tiefkühlung kann bei -40 Grad Celsius liegen.

Der Spieß wird vor dem Kühl- und/oder Gefriervorgang verpackt. Dies erfolgt durch konsekutiven Einsatz von dünner Kunststofffolie, wodurch um den Spieß durch die hohe Zahl der Umwicklungen mit dünner Kunststofffolie bedingt ein dickes "Konglomerat" und/oder "Dickicht" aus Kunststofffolie entsteht. Dieses schützt den Lebensmittelspieß vor externer physischer Einwirkung, vor Schmutz und hält diesen in Form.

Der so "eingepackte" Spieß wird an den Kunden verkauft und geliefert. Bei Bedarf entfernt der Kunde (z.B. das Dönerrestaurant) die dicke Kunststofffolie. In der Regel geschieht dies durch "Aufschneiden" des Folienkonglomerats mit einem scharfen Gegenstand wie einem Messer oder einer Säge, häufig elektrisch. Die Kunde entnimmt den Dönerspieß, die Kunststoffverpackung entsorgt er.

Der Stand der Technik bezüglich der Verpackung und Stabilisierung der Lebensmittelspieße bringt jedoch zahlreiche Nachteile mit sich.

Es wird viel Arbeitszeit und viel Folie verwendet. Das Einpacken ist aufwendig. Das Auspacken ist aufwendig, mühselig und produziert viel Müll großen Volumens, welcher entsorgt werden muss. Es kann daher aus unwirtschaftlich, aufwendig und schlecht für die Umwelt betrachtet werden.

Eine übliche beispielhafte Folie hat z.B. ca. 12 Mikrometer Folienstärke.

Je größer der Spieß, desto mehr Folie wird benötigt. Um das Ausmaß zu verdeutlichen: Die üblichen Rollen (ca. 300 - 320 Gramm) reichen pro Rolle - unter optimalen Umständen - für 16,4 kg schwere Dönerspieße aus. In der Praxis reicht eine Rolle nur für einen 15,2 kg schweren Dönerspieß. Für schwerere Dönerspieße werden so üblicherweise mehrere Rollen Folie um den zu verpackenden Spieß sukzessive umwickelt.

Es kommt dabei ferner auf die Qualität der Folie und maßgeblich auf die Arbeitsqualität und die Arbeitseffizienz des Wicklers an. Das Einpacken des Spießes in Kunststofffolie hat sich zu einem regelrechten "Kult" bei den Mitarbeitern der Lieferbetriebe entwickelt. Ein besonders effizienter und begabter Mitarbeiter demonstriert seine Fähigkeiten beispielhaft in diesem Video, welches auf YouTube betrachtet werden kann: www.youtube.com/shorts/M9Ik8PCe-UI

Die vorliegende Erfindung hat sich zur Aufgabe gemacht, die genannten Nachteile des Standes der Technik zu überwinden und ermöglicht eine neue Lösung. Die Lösung ist kostengünstiger, wirtschaftlicher, zeitsparender, effizienter, umweltschonender als der Stand der Technik.

In diesem Sinne werden die Nachteile des Standes der Technik überwunden durch die Lebensmittelspießstabilisierungsvorrichtung nach Anspruch 1.

### Beschreibung der Erfindung

Die vorliegende Erfindung schafft eine Vorrichtung mit den Merkmalen des Anspruchs 1 und entsprechende Einsatzverfahren. Weitere vorteilhafte Ausgestaltungen sind in den Unteransprüchen angegeben.

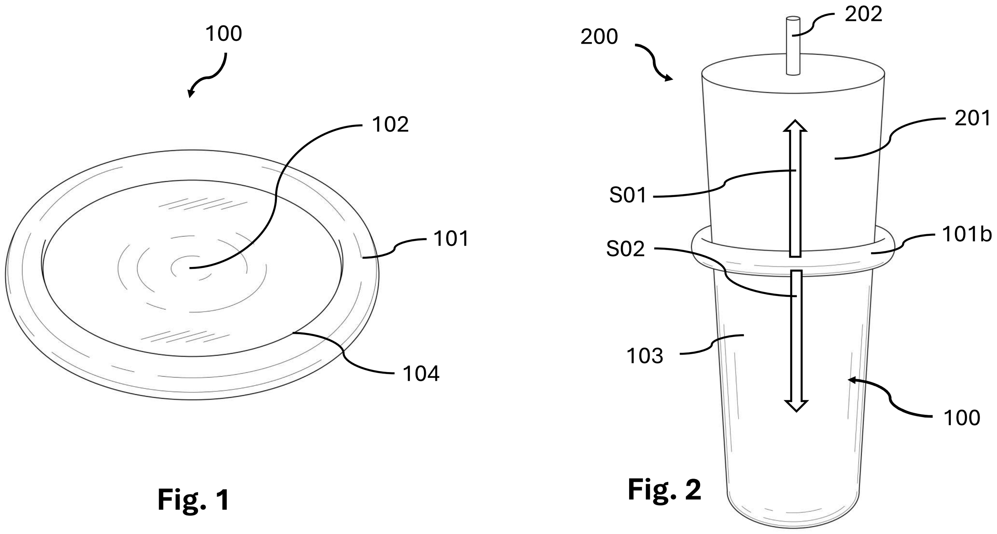

Es wird eine Lebensmittelspießstabilisierungsvorrichtung geschaffen. Diese kann man sich beispielsweise intuitiv wie ein "großes Präservativ" vorstellen, welches auf einem Lebensmittelspieß, insbesondere einem Dönerspieß, "abgerollt" wird. Beispielsweise wird die Lebensmittelspießstabilisierungsvorrichtung "abrollend" (unter Nutzung von Haftreibung) auf den Lebensmittelspieß abgerollt (vergleiche u.a. Figur 2).

Die Lebensmittelspießstabilisierungsvorrichtung kann sodann die notwendige Stabilität, den notwendigen Schutz und/oder die notwendige Formgebung an den Lebensmittelspieß verleihen. Beispielsweise geschieht dies vor einem Tiefkühlen oder Einfrieren. Vorteilhafterweise hat die Lebensmittelspießstabilisierungsvorrichtung elastische Eigenschaften, welche auch bei ca. -40 Grad Celsius noch erhalten bleiben.

Die Lebensmittelspießstabilisierungsvorrichtung kann auch wieder "aufgerollt" werden (bspw. ebenso unter Nutzung von Haftreibung). Dies ermöglicht einen reversiblen Nutzungsprozess. Im aufgerollten Zustand kann die Lebensmittelspießstabilisierungsvorrichtung so einen ringförmigen Wulst aufgerollten Schutzmaterials aufweisen (vergleiche u.a. Figur 1; vergleiche ferner abermals Analogie eines "Präservativs unmittelbar nach dem Ablegen der Verpackung").

Gemäß Anspruch 1 wird so eine Lebensmittelspießstabilisierungsvorrichtung geschaffen.

Die Lebensmittelspießstabilisierungsvorrichtung kann eine zusammengerollte und/oder zusammenrollbare Struktur umfassen. Die zusammengerollte und/oder zusammenrollbare Struktur kann zusammengerollt einen ringförmigen Wulst umfassen. Der Wulst, welcher durch das Zusammenrollen gebildet werden kann, kann dazu geeignet sein, an einem bestückten Lebensmittelspieß im Bereich eines Spießendes angesetzt zu werden. Der Wulst kann dazu geeignet sein, entlang des Spießes in Längsrichtung des Spießes durch abrollendes Schieben des ringförmigen Wulstes am Spieß entlang abgerollt zu werden. Durch das Abrollen kann eine schlauchartige Verkleidung des Lebensmittelspießes um den Lebensmittelspieß herum gebildet werden, wodurch der Lebensmittelspieß geschützt werden kann.

Das aufwändige "Einwickeln in dünne Kunststofffolie" entfällt.

Die Vorrichtung stabilisiert den Lebensmittelspieß und schützt diesen. Die Vorrichtung kann mehrmals wiederverwendet werden, was Müll reduziert.

Der Spieß kann bereits nach einmaligem Abrollen (wie bei einem Präservativ) seitlich durchgehend umschlossen sein. Das Prinzip "eine Wicklung" statt "mehrmaligem Umwickeln" zum Ausfüllen von Lücken etc. entfaltet so seine Wirkung.

Die Vorrichtung kann beispielsweise auch wieder "abgerollt" werden (reversibler Prozess). Dabei wird der Lebensmittelspieß wieder freigelegt ("ausgepackt"). Ferner kann hierdurch auch die Vorrichtung wieder in abrollfertigen, d.h. einsatzfertigen Zustand überführt werden.

Tiefen Temperaturen (ca. -40 Grad Celsius) kann die Vorrichtung standhalten. Ferner kann sie auch, aufgrund der notwendigen elastischen Eigenschaften bei derart tiefen Temperaturen, bei diesen Temperaturen problemlos wieder aufgerollt werden.

Beispielsweise kann eine erfindungsgemäße Stabilisierungsvorrichtung (im aufgerollten Zustand) an einem unteren Spießende zum Abrollen angesetzt werden ("Präservativ wird von unten aufgezogen", vgl. bspw. Figur 2). Dies ist besonders einfach in der Vorgehensweise. So kann das Aufziehen besonders kontrolliert erfolgen. Auch ein Abrollen erfolgt so besonders kontrolliert. Es können ferner Verschlussvorrichtungen und/oder Befestigungsmittel (z.B. Laschen mit Ösen) vorgesehen sein, welche sich besonders gut an einem oberen Spießende handelsüblicher Spieße einhaken lassen können. Nach einem Abrollen hat man die abgerollte Vorrichtung kontrolliert, beispielsweise in der Nähe einer Werk- oder Arbeitsfläche, vorliegen.

Bevorzugte Materialien sind solche mit reversibel-elastischen Eigenschaften; insbesondere Silikon, Silikonkautschuk, Polyethylen, Aramide und/oder Kombinationen hieraus; bevorzugterweise lebensmittelecht. Die reversibel-elastischen Eigenschaften sollten insbesondere bei negativen Temperaturen von -40 Grad erhalten bleiben, und diese Eigenschaften sollten trotz regelmäßiger starker Temperaturschwankungen, z.B. von -40 Grad bis Raumtemperatur, erhalten bleiben.

Es können ferner Verschlussvorrichtungen und/oder Befestigungsmittel (z.B. Laschen mit Ösen) vorgesehen sein, insbesondere an dem Ende der Stabilisierungsvorrichtung, welches erst mit einem Abrollvorgang freigelegt wird. Solche Verschlussvorrichtungen und/oder Befestigungsmittel können vorteilhafterweise integral mit der Stabilisierungsvorrichtung, z.B. im Übrigen (insbesondere dem "Schlauchteil"), ausgebildet sein.

Als Herstellungsverfahren eignet sich insbesondere Spritzguss (Wirtschaftlichkeit für große Stückmengen).

Transparentes oder semitransparentes Material kann eine Sicht auf das eigentliche Produkt ermöglichen.

Die Erfindung kann mit dem Stand der Technik "kombiniert" werden. Dabei wird beispielsweise ein Lebensmittelspieß in nur wenige Lagen Folie eingewickelt. Danach wird er mit der Lebensmittelspießstabilisierungsvorrichtung überzogen. Hierdurch wird jedenfalls die benötigte und vergeudete Menge an Folie um einen sehr hohen multiplikativen Faktor reduziert. Die nur sehr dünnen Folienlagen dieser Zwischenverkleidung können zur Hygiene beitragen, lassen sich jedoch nach einem Abrollen der Stabilisierungsvorrichtung sehr leicht entfernen (flexible einzelne Lagen dünner Folie; kein dickes "Foliendickicht", welches "aufgesägt" werden muss).

Karton, Pappkarton und kartonbasierte Materialien können alternativ als Materialien für die Lebensmittelspießstabilisierungsvorrichtung eingesetzt werden. Insbesondere kann hierdurch ein besonders günstiges Produkt hergestellt werden. Es kann vorgesehen sein, dass das günstige Produkt spezifisch für einen einmaligen Einsatz, oder nur für wenige Einsätze, angedacht ist, während eine silikonbasierte Variante für den wiederholten Dauereinsatz bestimmt ist.

Die Lebensmittelspießstabilisierungsvorrichtung kann ich verschiedenen Farben ausgeführt sein. Es kann vorgesehen sein, dass eine bestimmte Farbe einer bestimmten Größe zugeordnet ist (bspw. standardisierte Dönerspießgrößen, 15,2 kg, 16,4 kg etc.). Durch die Farbkodierung greifen Mitarbeiter intuitiv und ohne Augenmaß anzuwenden zur korrekten (passenden) Stabilisierungsvorrichtung (insbesondere auch wenn diese aufgerollt, d.h. einsatzfertig, vorliegt).

Für ein verbessertes beispielhaftes Verständnis der Ausführungsformen wird auf die Figuren und die zugehörigen Figurenbeschreibungen verwiesen.

Merkmale der erfindungsgemäßen Vorrichtungen (welche als solche offenbart sind) lassen sich mit Merkmalen der erfindungsgemäßen Verfahren kombinieren, als auch umgekehrt.

### Figurenliste

Die vorliegende Erfindung wird nachfolgend anhand der in den schematischen Figuren der Zeichnungen angegebenen Ausführungsbeispiele näher erläutert. Es zeigen dabei:
Fig. 1 eine Ausführungsform einer Lebensmittelspießstabilisierungsvorrichtung im aufgerollten (einsatzfertigen) Zustand;
Fig. 2 eine Ausführungsform einer Lebensmittelspießstabilisierungsvorrichtung während eines Aufroll- oder Abrollvorganges an einem Lebensmittelspieß (Stabilisierungsvorrichtung "halb aufgezogen");
Figs. 3, 4 eine Ausführungsform einer an einem Spieß vollständig aufgezogenen Lebensmittelspießstabilisierungsvorrichtung, mit integral ausgebildeten Laschen zum endseitigen Verschluss am Spieß
Figs. 5, 6 eine Profilansicht beispielhafter Laschen mit Ösen, mit und ohne beispielhafte Maße.

In allen Figuren sind gleiche bzw. funktionsgleiche Elemente und Vorrichtungen - sofern nichts anderes angegeben ist - mit denselben Bezugszeichen versehen worden.

### Beschreibung der Zeichnungen

Die Figur 1 zeigt eine Ausführungsform einer Lebensmittelspießstabilisierungsvorrichtung im aufgerollten (einsatzfertigen) Zustand. Die Figur 2 zeigt sodann eine Ausführungsform einer Lebensmittelspießstabilisierungsvorrichtung während eines Aufroll- S02 oder Abrollvorganges S01 an einem Lebensmittelspieß (Stabilisierungsvorrichtung "halb aufgezogen").

Zum Verkleiden eines bestückten Spießes 200 wird der Mittelpunkt 102 des ringförmigen Wulstes 101 an einem unteren Spießende des bestückten Spießes 200 (dem Produkt) angesetzt.

Der ringförmige Wulst 101 wird sodann am Produkt abgerollt gemäß Schritt S01. Dabei wird der ringförmige Wulst 101 zu einer schlauchartigen Verkleidung 103 überführt.

Der bestückte Spieß 200, insbesondere seine wertvolle Bestückung 201, wird geschützt vor äußeren Kräften, Verformungen, Verunreinigungen und stabilisiert.

Der Dönerspieß 200 als solcher mündet endseitig am oberen Spießende in dem Ende 202 der Dönerhülse.

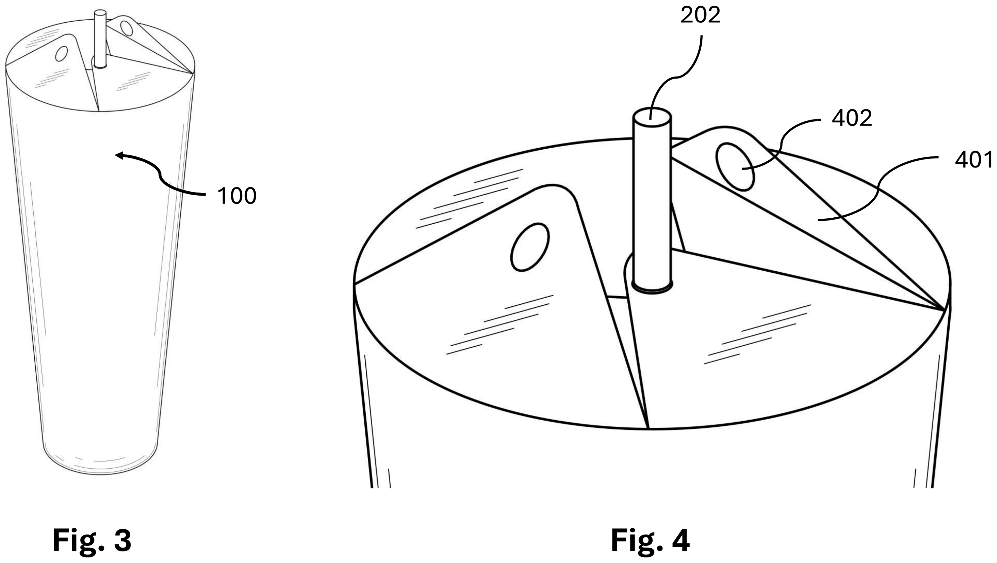

Die Figuren 3 und 4 zeigen eine Ausführungsform einer an einem Spieß vollständig aufgezogenen Lebensmittelspießstabilisierungsvorrichtung, mit integral ausgebildeten Laschen zum endseitigen Verschluss am Spieß.

Ist die Vorrichtung am Spieß vollständig aufgezogen, dann wird die Verschluss- und/oder Befestigungsvorrichtung freigelegt. (Diese kann vorher, teilweise oder bevorzugterweise ganz, in dem ringförmigen Wulst enthalten und "mit aufgerollt" gewesen sein.) Bevorzugterweise ist die Verschluss- und/oder Befestigungsvorrichtung integral mit dem Schlauchteil ausgebildet, wodurch sie sich besonders einfach "mit einrollen" lässt.

An der Dönerhülse 202 können sodann beispielsweise die Ösen 402 der Laschen 401 eingehängt werden.

Der Spieß kann nun (ggf. tief)gekühlt und geliefert werden.

Bei Bedarf für einen Lebensmittelspieß 200 hakt der Kunde die Ösen 402 wieder aus und rollt die Lebensmittelspießstabilisierungsvorrichtung 100 wieder ab (Schritt S02). Dabei wird die schlauchartige Verkleidung 103 des Lebensmittelspießes zu einem ringförmigen Wulst 101 aufgerollt, d.h. rücküberführt.

Optional könnte noch eine - jedoch lediglich äußerst dünne, in der Regel ein- oder maximal zweilagige - zusätzliche dünne Schutzfolie (zusätzliche Zwischenverkleidung) zu entfernen sein.

Der Kunde kann nun den Lebensmittelspieß 200 in seinen Dönergrill einsetzen, und die - bereits erneut einsatzfertigen - Lebensmittelspießstabilisierungsvorrichtungen 100 bei nächster Gelegenheit dem Lieferanten zurückgeben.

Alternativ zu dieser Vorgehensweise kann auch der Lieferant bereits bei Lieferung die tiefgekühlten Lebensmittelspieße entkleiden und die erneut einsatzfertigen Lebensmittelspießstabilisierungsvorrichtungen 100 direkt wieder mitnehmen. Der Kunde hat in diesem Falle tiefgefrorene Spieße zu seiner Verfügung, die die gute gewünschte Formgebung aufweisen und die er insbesondere nicht mehr aufwändig auspacken muss.

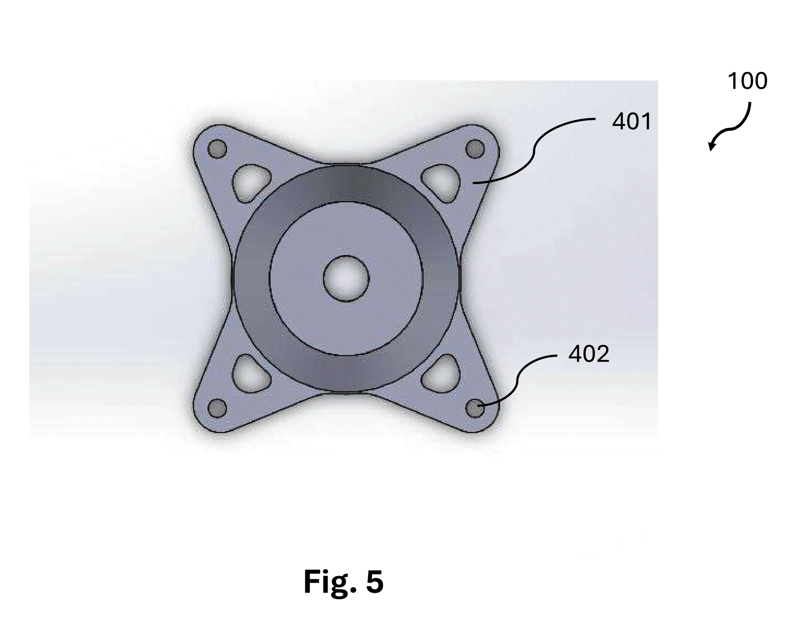

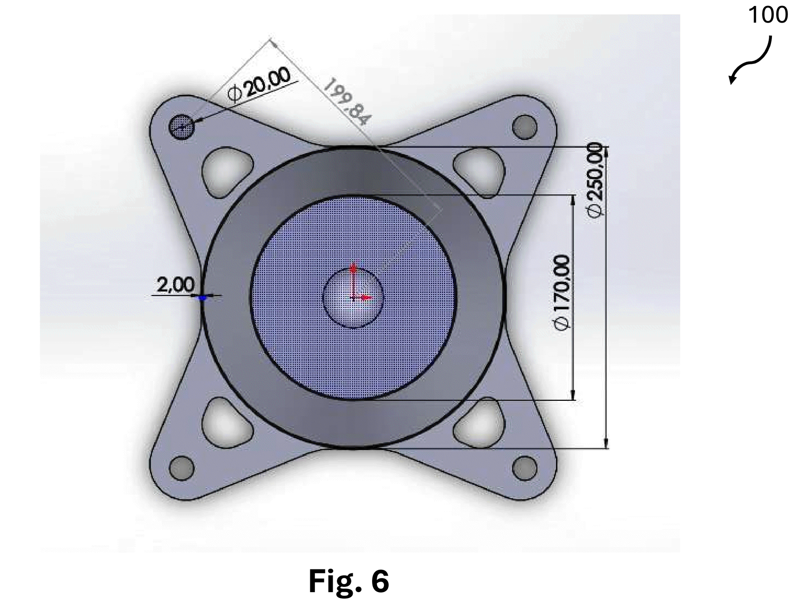

Die Figuren 5 und 6 zeigen eine Profilansicht beispielhafter Laschen mit Ösen, mit und ohne beispielhafte Maße.

### Weitere Offenbarungen der Patentanmeldung

1. Lebensmittelspießstabilisierungsvorrichtung (100), umfassend eine zusammengerollte und/oder zusammenrollbare Struktur, welche zusammengerollt einen ringförmigen Wulst (101) umfasst, welcher durch das Zusammenrollen gebildet wird, und dazu geeignet ist, an einem bestückten Lebensmittelspieß (200) im Bereich eines Spießendes angesetzt zu werden und entlang des Spießes in Längsrichtung des Spießes durch abrollendes Schieben des ringförmigen Wulstes (101b) am Spieß entlang abgerollt zu werden, wobei durch das Abrollen eine schlauchartige Verkleidung (103) des Lebensmittelspießes (200) um den Lebensmittelspieß (200) herum gebildet wird, um diesen zu schützen.
2. Lebensmittelspießstabilisierungsvorrichtung (100) nach Anspruch 1, wobei bereits nach einmaligem Abrollen des ringförmigen Wulstes (101, 101b), einmalig in der Längsrichtung des Spießes (200) am Spieß entlang, der Spieß (200) seitlich verkleidend umschlossen ist.
3. Lebensmittelspießstabilisierungsvorrichtung (100) nach Anspruch 1 oder 2, welche dazu eingerichtet ist, an einem unteren Spießende zum Abrollen angesetzt zu werden, wobei das Spießende zur Mitte des ringförmigen Wulstes (101) zeigt und/oder hierin zentriert ist und/oder wobei der Wulst außen liegt.
4. Lebensmittelspießstabilisierungsvorrichtung (100) nach einem der vorhergehenden Ansprüche aus reversibel-elastischem Material, insbesondere umfassend eines oder mehr aus: Silikon, Silikonkautschuk, Polyethylen, Aramide.
   inbesondere geeignet zur Erzeugung und Nutzung von Haftreibung.
5. Lebensmittelspießstabilisierungsvorrichtung (100) nach einem der vorhergehenden Ansprüche aus einem Material mit reversibel-elastischen Eigenschaften bei -40 Grad Celsius.
6. Lebensmittelspießstabilisierungsvorrichtung (100) nach einem der vorhergehenden Ansprüche, ferner eingerichtet zu einem möglichen Aufrollen, wobei durch das Aufrollen eine schlauchartige Verkleidung (103) des Lebensmittelspießes (200) um den Lebensmittelspieß (200) herum zu einem ringförmigen Wulst (101, 101b) überführt wird und/oder auf einen solchen Wulst (101, 101b) aufgewickelt wird, insbesondere entlang des Spießes in Längsrichtung des Spießes (200) durch aufrollendes Schieben des ringförmigen Wulstes am Spieß entlang, insbesondere unter Nutzung von Haftreibung.
7. Lebensmittelspießstabilisierungsvorrichtung (100) nach einem der vorhergehenden Ansprüche, welche dazu eingerichtet ist, ein Abrollen und/oder Aufrollen zwischen dem ringförmigen Wulst (101b) einseits und dem Lebensmittelspieß (200) und/oder einer Zwischenverkleidung andererseits unter Nutzung von Haftreibung stattfinden zu lassen.
8. Lebensmittelspießstabilisierungsvorrichtung (100) nach einem der vorhergehenden Ansprüche, aufweisend mindestens eine Verschlussvorrichtung (401, 402) zur Befestigung am Spieß, insbesondere Lasche, insbesondere mehrere Verschlussvorrichtungen (401, 402) zur Befestigung am Spieß, insbesondere mehrere Laschen, insbesondere jeweils mindestens zwei, drei oder vier, wobei die mindestens eine Verschlussvorrichtung bei einem Abrollen des ringförmigen Wulstes freigelegt wird.
9. Lebensmittelspießstabilisierungsvorrichtung (100) nach Anspruch 8, wobei die mindestens eine Verschlussvorrichtung (401, 402) mindestens eine Lasche umfasst, wobei die mindestens eine Lasche integral mit dem ringförmigen Wulst (101, 101b) und/oder der schlauchartigen Verkleidung (103) ausgebildet ist.
10. Lebensmittelspießstabilisierungsvorrichtung (100) nach Anspruch 8 oder 9, mit mindestens einer Aussparung oder Öse (402) in der mindestens einen Verschlussvorrichtung und/oder Lasche, geeignet für ein aufsteckendes und/oder einhakendes Befestigen der mindestens einen Verschlussvorrichtung und/oder Lasche an einem Lebensmittelspieß, insbesondere auch an einer Lebensmittelspießhülse.
11. Lebensmittelspießstabilisierungsvorrichtung (100) nach einem der vorhergehenden Ansprüche, geeignet zur mehrmaligen Verwendung, insbesondere mehr als 1000 Auf- und Abrollvorgänge.
12. Lebensmittelspießstabilisierungsvorrichtung (100) nach einem der vorhergehenden Ansprüche, geeignet für einen bestimmungsgemäßen Einsatz bei -40 Grad Celsius, insbesondere geeignet für regelmäßig wiederkehrende Gefrier- und Auftauvorgänge zwischen -40 Grad Celsius und 25 Grad Celsius, insbesondere mehr als 1000 Gefrier- und Auftauvorgänge.
13. Lebensmittelspießstabilisierungsvorrichtung (100) nach einem der vorhergehenden Ansprüche, aufweisend eine Zentrierhilfe (102) zur Ausrichtung des ringförmigen Wulstes am Spieß im aufgerollten Zustand, beispielsweise in Form einer Vertiefung, eines Loches oder eines Ringes.
14. Lebensmittelspießstabilisierungsvorrichtung (100) nach einem der vorhergehenden Ansprüche für Fleischwaren, insbesondere für Dönerfleisch, insbesondere tiefgekühltes, gekühltes und/oder tiefzukühlendes Dönerfleisch.
15. Lebensmittelspießstabilisierungsvorrichtung (100) nach einem der vorhergehenden Ansprüche, wobei die zusammengerollte und/oder zusammenrollbare Struktur ein transparentes oder semitransparentes Material umfasst, insbesondere transparentes oder milchiges Silikon.
16. Verfahren zur Stabilisierung eines Lebensmittelspießes (200), insbesondere Dönerspießes, mittels der Lebensmittelspießstabilisierungsvorrichtung (100) nach einem der vorhergehenden Ansprüche, umfassend:
   Bereitstellen eines mit Lebensmittel bestückten Lebensmittelspießes (200), insbesondere bestückten Dönerspießes, insbesondere mit Dönerfleisch bestückten Dönerspießes;
   Abrollen (S01) der Lebensmittelspießstabilisierungsvorrichtung entlang des bestückten Lebensmittelspießes.
17. Verfahren nach Anspruch 16, wobei beim Abrollen (S01) der ringförmige Wulst (101, 101b) der Lebensmittelspießstabilisierungsvorrichtung (100) unter Nutzung von Haftreibung zwischen der Lebensmittelspießstabilisierungsvorrichtung und dem bestückten Lebensmittelspieß in eine Verkleidung des Lebensmittelspießes, insbesondere dicht anliegende Verkleidung, überführt wird.
18. Verfahren zum Bereitstellen und/oder Auspacken eines Lebensmittelspießes, insbesondere Dönerspießes, welcher in einer Lebensmittelspießstabilisierungsvorrichtung (100) nach einem der Ansprüche 1 - 15 verkleidet ist und/oder nach einem Verfahren nach Anspruch 16 oder 17 verkleidet wurde, umfassend
   Entfernen der Lebensmittelspießstabilisierungsvorrichtung von einem seitlichen Bereich des Lebensmittelspießes, unter Aufrollen (S02) der Lebensmittelspießstabilisierungsvorrichtung zu einem ringförmigen Wulst (101).
19. Verfahren nach Anspruch 18, wobei die Lebensmittelspießstabilisierungsvorrichtung (100) nach dem Aufrollen (S02) abgenommen werden kann, diese umfassend den ringförmigen Wulst (101), und bereits geeignet ist, an einem anderen Lebensmittelspieß (200) erneut abgerollt zu werden.

### Bezugszeichenliste

- 100: Lebensmittelspießstabilisierungsvorrichtung
- 101: Ringförmiger Wulst (aufgerollt)
- 101b: teilweise reduzierter ringförmiger Wulst
- 102: Zentrierhilfe, und Mittelpunkt des ringförmigen Wulstes
- 103: Schlauchartige Verkleidung
- 104: Übergang zu Schlauchteil / ringförmigem Wulst
- 200: Lebensmittelspieß "bestückt"
- 201: Lebensmittelbestückung/Dönerfleisch
- 202: Ende Dönerhülse
- 401: Lasche (integral ausgestaltet mit Schlauchteil)
- 402: Öse / Verschluss

- S01: Abrollen (Ringförmiger Wulst wird zu schlauchartiger Verkleidung)
- S02: Aufrollen (Schlauchartiger Verkleidung wird zu ringförmigem Wulst)

## Patentansprüche

1. Lebensmittelspießstabilisierungsvorrichtung (100), umfassend eine zusammengerollte und/oder zusammenrollbare Struktur, welche zusammengerollt einen ringförmigen Wulst (101) umfasst, welcher durch das Zusammenrollen gebildet wird, und dazu geeignet ist, an einem bestückten Lebensmittelspieß (200) im Bereich eines Spießendes angesetzt zu werden und entlang des Spießes in Längsrichtung des Spießes durch abrollendes Schieben des ringförmigen Wulstes (101b) am Spieß entlang abgerollt zu werden, wobei durch das Abrollen eine schlauchartige Verkleidung (103) des Lebensmittelspießes (200) um den Lebensmittelspieß (200) herum gebildet wird, um diesen zu schützen, die Lebensmittelspießstabilisierungsvorrichtung ferner aufweisend eine Zentrierhilfe (102) zur Ausrichtung des ringförmigen Wulstes am Spieß im aufgerollten Zustand, beispielsweise in Form einer Vertiefung, eines Loches oder eines Ringes.

2. Lebensmittelspießstabilisierungsvorrichtung (100) nach Anspruch 1, wobei bereits nach einmaligem Abrollen des ringförmigen Wulstes (101, 101b), einmalig in der Längsrichtung des Spießes (200) am Spieß entlang, der Spieß (200) seitlich verkleidend umschlossen ist.

3. Lebensmittelspießstabilisierungsvorrichtung (100) nach Anspruch 1 oder 2, welche dazu eingerichtet ist, an einem unteren Spießende zum Abrollen angesetzt zu werden, wobei das Spießende zur Mitte des ringförmigen Wulstes (101) zeigt und/oder hierin zentriert ist und/oder wobei der Wulst außen liegt.

4. Lebensmittelspießstabilisierungsvorrichtung (100) nach einem der vorhergehenden Ansprüche aus reversibel-elastischem Material, insbesondere umfassend eines oder mehr aus: Silikon, Silikonkautschuk, Polyethylen, Aramide.
inbesondere geeignet zur Erzeugung und Nutzung von Haftreibung.

5. Lebensmittelspießstabilisierungsvorrichtung (100) nach einem der vorhergehenden Ansprüche aus einem Material mit reversibel-elastischen Eigenschaften bei -40 Grad Celsius.

6. Lebensmittelspießstabilisierungsvorrichtung (100) nach einem der vorhergehenden Ansprüche, ferner eingerichtet zu einem möglichen Aufrollen, wobei durch das Aufrollen eine schlauchartige Verkleidung (103) des Lebensmittelspießes (200) um den Lebensmittelspieß (200) herum zu einem ringförmigen Wulst (101, 101b) überführt wird und/oder auf einen solchen Wulst (101, 101b) aufgewickelt wird, insbesondere entlang des Spießes in Längsrichtung des Spießes (200) durch aufrollendes Schieben des ringförmigen Wulstes am Spieß entlang, insbesondere unter Nutzung von Haftreibung.

7. Lebensmittelspießstabilisierungsvorrichtung (100) nach einem der vorhergehenden Ansprüche, welche dazu eingerichtet ist, ein Abrollen und/oder Aufrollen zwischen dem ringförmigen Wulst (101b) einseits und dem Lebensmittelspieß (200) und/oder einer Zwischenverkleidung andererseits unter Nutzung von Haftreibung stattfinden zu lassen.

8. Lebensmittelspießstabilisierungsvorrichtung (100) nach einem der vorhergehenden Ansprüche, aufweisend mindestens eine Verschlussvorrichtung (401, 402) zur Befestigung am Spieß, insbesondere Lasche, insbesondere mehrere Verschlussvorrichtungen (401, 402) zur Befestigung am Spieß, insbesondere mehrere Laschen, insbesondere jeweils mindestens zwei, drei oder vier, wobei die mindestens eine Verschlussvorrichtung bei einem Abrollen des ringförmigen Wulstes freigelegt wird.

9. Lebensmittelspießstabilisierungsvorrichtung (100) nach Anspruch 8, wobei die mindestens eine Verschlussvorrichtung (401, 402) mindestens eine Lasche umfasst, wobei die mindestens eine Lasche integral mit dem ringförmigen Wulst (101, 101b) und/oder der schlauchartigen Verkleidung (103) ausgebildet ist.

10. Lebensmittelspießstabilisierungsvorrichtung (100) nach Anspruch 8 oder 9, mit mindestens einer Aussparung oder Öse (402) in der mindestens einen Verschlussvorrichtung und/oder Lasche, geeignet für ein aufsteckendes und/oder einhakendes Befestigen der mindestens einen Verschlussvorrichtung und/oder Lasche an einem Lebensmittelspieß, insbesondere auch an einer Lebensmittelspießhülse.

11. Lebensmittelspießstabilisierungsvorrichtung (100) nach einem der vorhergehenden Ansprüche, geeignet zur mehrmaligen Verwendung, insbesondere mehr als 1000 Auf- und Abrollvorgänge,
und/oder für einen bestimmungsgemäßen Einsatz bei -40 Grad Celsius, insbesondere geeignet für regelmäßig wiederkehrende Gefrier- und Auftauvorgänge zwischen -40 Grad Celsius und 25 Grad Celsius, insbesondere mehr als 1000 Gefrier- und Auftauvorgänge,
und/oder für Fleischwaren, insbesondere für Dönerfleisch, insbesondere tiefgekühltes, gekühltes und/oder tiefzukühlendes Dönerfleisch,
und/oder wobei die zusammengerollte und/oder zusammenrollbare Struktur ein transparentes oder semitransparentes Material umfasst, insbesondere transparentes oder milchiges Silikon.

12. Verfahren zur Stabilisierung eines Lebensmittelspießes (200), insbesondere Dönerspießes, mittels der Lebensmittelspießstabilisierungsvorrichtung (100) nach einem der vorhergehenden Ansprüche, umfassend:
Bereitstellen eines mit Lebensmittel bestückten Lebensmittelspießes (200), insbesondere bestückten Dönerspießes, insbesondere mit Dönerfleisch bestückten Dönerspießes;
Abrollen (S01) der Lebensmittelspießstabilisierungsvorrichtung entlang des bestückten Lebensmittelspießes.

13. Verfahren nach Anspruch 12, wobei beim Abrollen (S01) der ringförmige Wulst (101, 101b) der Lebensmittelspießstabilisierungsvorrichtung (100) unter Nutzung von Haftreibung zwischen der Lebensmittelspießstabilisierungsvorrichtung und dem bestückten Lebensmittelspieß in eine Verkleidung des Lebensmittelspießes, insbesondere dicht anliegende Verkleidung, überführt wird.

14. Verfahren zum Bereitstellen und/oder Auspacken eines Lebensmittelspießes, insbesondere Dönerspießes, welcher in einer Lebensmittelspießstabilisierungsvorrichtung (100) nach einem der Ansprüche 1 - 11 verkleidet ist und/oder nach einem Verfahren nach Anspruch 12 oder 13 verkleidet wurde, umfassend
Entfernen der Lebensmittelspießstabilisierungsvorrichtung von einem seitlichen Bereich des Lebensmittelspießes, unter Aufrollen (S02) der Lebensmittelspießstabilisierungsvorrichtung zu einem ringförmigen Wulst (101).

15. Verfahren nach Anspruch 14, wobei die Lebensmittelspießstabilisierungsvorrichtung (100) nach dem Aufrollen (S02) abgenommen werden kann, diese umfassend den ringförmigen Wulst (101), und bereits geeignet ist, an einem anderen Lebensmittelspieß (200) erneut abgerollt zu werden.
